# EUROPEAN PATENT SPECIFICATION

(11) **EP 0 368 521 B1**
(45) Date of publication and mention of the grant of the patent: **13.07.1994**
(21) Application number: 89311121.1
(22) Date of filing: 27.10.1989
(51) Int. Cl.: B60J 10/06, B60R 13/02, B60J 10/04, B60R 13/04

(54) **Vehicle trim**
Verkleidungsteil für Fahrzeuge
Bande décorative pour véhicules

(30) Priority: 09.11.1988 US 269131
(43) Date of publication of application: 16.05.1990
(73) Proprietor: THE STANDARD PRODUCTS COMPANY, Cleveland Ohio 44102 (US)
(72) Inventor: Vaughan, Robert Albert, Dearborn Michigan 48124 (US); Belser, John William, Northville Michigan 48167 (US)
(74) Representative: Jones, Michael Raymond

(56) References cited:
- EP-A- 0 279 998
- DE-A- 3 340 476
- FR-A- 2 629 129
- US-A- 3 714 751

## Description

The present invention relates to automotive vehicles and, more particularly, to automotive vehicle trim which is retained on a door or the like by weather stripping.

Decorative trim molding on vehicles is very popular in the automotive industry. Decorative trim positioned about doors or the like adds aesthetic value to the vehicle. Ordinarily, this vehicle trim is secured to the door by auxiliary fasteners, such as screws, clips, rivets or the like, to retain the molding onto the vehicle. While these types of fasteners are satisfactory, designers are always searching for alternate methods.

The following U.S. patents illustrate several types of devices which retain automotive trim molding onto a vehicle. The patents are as follows. U.S. Patent Nos. 1,714,256, issued May 21, 1929 to Bailey; 2,435,523, issued February 3, 1948 to Weaver et al; 2,606,635, issued August 12, 1952 to Clingman; 2,671,541, issued March 9, 1954 to Kramer; 2,888,684, issued June 2, 1959 to Icenhower; 3,634,991, issued January 18, 1972 to Barton Jr. et al; 3,714,751, issued February 6, 1973 to Lackey; 3,766,697, issued October 23, 1973 to Jackson; 3,968,613, issued July 13, 1976 to Meyer; 4,119,325, issued October 10, 1978 to Oakley et al; 4,147,005, issued April 3, 1979 to Meyer; 4,147,006, issued April 3, 1979 to Kruschwitz; 4,165,083, issued August 21, 1979 to Dochnahl; and 4,649,668, issued March 17, 1987 to Skillen et al.

In FR-A-2629129 (published after the priority date of the present application), there is disclosed a weather stripping which is retained on a flange of a vehicle and which is sealed with respect to the vehicle. An automotive trim strip is also retained on the vehicle, by means of the weather stripping.

According to the present invention, there is provided a system for attaching automotive trim to a vehicle door, comprising:
weather stripping adapted to be secured on a flange of the vehicle door, said weather stripping having means for receiving a movable window, means for retaining said weather stripping on the door flange and means for sealing said weather stripping with respect to the vehicle door; and
an automotive trim strip having a reinforcement member with an overall L shape, one leg of said L-shaped member including means for retaining said automotive trim strip on the vehicle door and said one leg being rigid and adapted to be forced between said weather stripping and said vehicle door to be retained by said weather stripping, said trim strip retaining means coupling with said weather stripping sealing means for retaining said automotive trim strip on the vehicle door.

The present invention also provides a system for attaching an automotive trim strip, comprising:
an automotive vehicle having a member defining an opening for a window or the like, said member including a peripheral flange extending inward into said opening;
weather stripping adapted to be secured to said peripheral flange, said weather stripping including means for receiving a movable window, means for securing said weather stripping to said flange and means for sealing said weather stripping with respect to said vehicle; and
trim strip for providing aesthetic appearance to said vehicle, said trim strip having a rigid reinforcement member with an overall L shape, one leg of said L-shaped member including means for securing said trim strip to said vehicle and said one leg being wedged between said weather stripping and said vehicle to be retained by said weather stripping, said trim strip retaining means mechanically coupling with said weather stripping sealing means for retaining said trim strip on the vehicle.

As used herein, the term "weather stripping" is intended to cover, inter alia, the elongate section, normally extruded and of uniform cross-section along its length, which seals an opening in a vehicle body to isolate the interior of the vehicle from external factors such as the weather. Thus, the weather stripping may seal any opening such as a door opening, a window opening (fixed - as in the case of a windscreen, or movable - as in the case of a vertically movable pane of glazing material), or a boot opening. The weather stripping may include a rigid reinforcing element normally made of a metal which may be solid or flexible - i.e. provided with apertures which enhance flexibility. The reinforcing element may be covered with an elastomeric material such as a rubber or a plastics material. The weather stripping may include portions intended to perform specific functions; thus, a weather stripping which fits around a window opening in a door will also include, or have associated with it, a glass run channel portion.

The term "trim strip" is intended to cover the elongate moulding, generally of uniform cross-section along its length secured to a vehicle and presenting a decorative portion.

The systems of the present invention are particularly suited for a vehicle door.

Preferably, the only mechanical means securing the trim strip in place is the mechanical coupling with the weather stripping. Thus, no screws, clips, rivets are required.

Accordingly, the present invention provides the art with a system to secure automotive trim strip to a vehicle. The present invention provides the art with a flush glass weather stripping which secures automotive trim strip onto the vehicle. The present invention also provides the art with a trim strip that is retained on the vehicle without the use of auxiliary fasteners such as screws, clips, or the like.

Preferably, the trim strip retaining means comprises a retention portion extending substantially transverse to a decorative portion of the automotive trim strip and one or more tabs extending from said retention portion, said tabs being capable of cooperating with said weather stripping for retaining said automotive trim strip on the vehicle.

Alternatively, the trim strip retaining means may comprise a retention portion extending substantially transverse to a decorative portion of the automotive strip, said retention portion including one or more apertures capable of cooperating with the said weather stripping for retaining said automotive strip on the vehicle.

The trim strip retaining means is conveniently coupled (for example by the tabs or apertures) with the sealing means of the weather stripping to retain the trim strip on the vehicle.

The trim strip may also include a polymeric strip on one surface of the retention portion to abut the surface of the vehicle and assist in retention of the trim strip.

For a better understanding of the present invention, and to show how the same may be carried into effect, reference will now be made by way of example to the accompanying drawings, in which:
Figure 1 is a side view of an automotive vehicle including door trim in accordance with the present invention;
Figure 2 is an enlarged side view of the door trim in accordance with the present invention;
Figure 3 is an exploded perspective view of door trim in accordance with the present invention;
Figure 4 is a horizontal section through the plane designated by line 4-4 thereof of Figure 2;
Figure 5 is an exploded perspective view of another door trim strip in accordance with the present invention; and
Figure 6 is a horizontal cross-section like that of Figure 4 of the door trim strip of Figure 5.

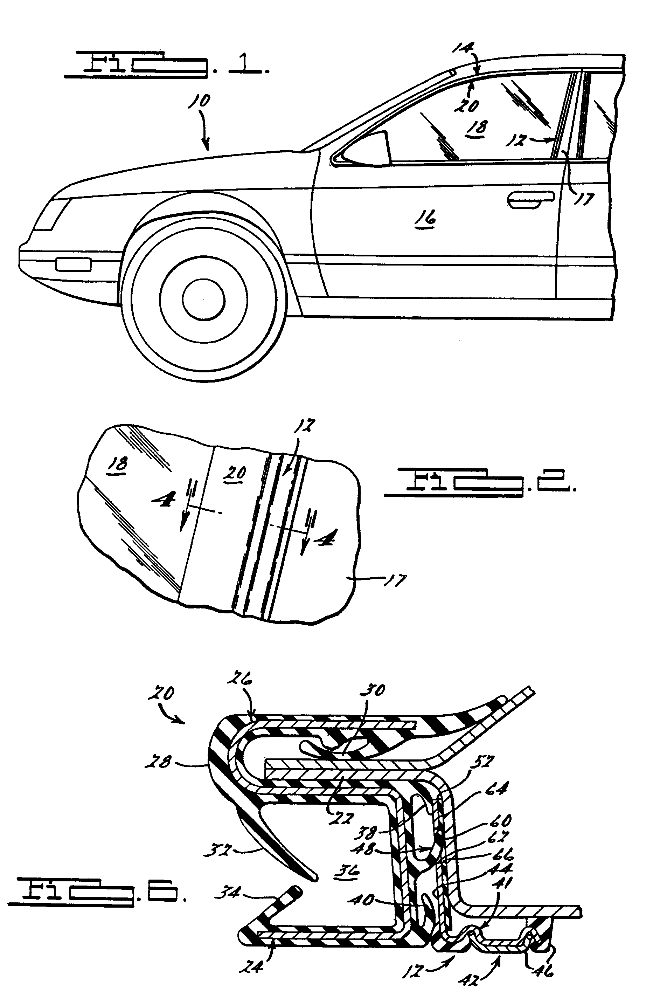

Turning to the figures, particularly Figure 1, a vehicle 10 is illustrated with an automotive trim strip 12. The automotive trim strip 12 may be positioned on the door header 14 or the like. The door 16 includes a pillar 17 along with the header 14 which enable a moveable window 18 to be positioned therein. A flush glass weather stripping 20 is positioned about the periphery of the opening defined by pillar 17 and header 14, and is associated with the window 18.

The door 16, pillar 17 and header 14 include a flange 22 peripherally extending into the opening of the door 16. The flange 22 couples with the weather stripping 20 to retain the weather stripping 20 onto the flange 22, as seen in Figure 4.

The weather striping 20 includes a metallic S-shaped reinforcement member 24. The reinforcement member 24 includes a U-shaped portion 26 which is positioned about the flange 22. A polymeric skin 28 surrounds the interior and exterior of the reinforcement S-shaped member 24, as seen in Figure 4. A retaining member 30 extends from the polymeric skin within the U-shaped portion 26. The retaining member 30 couples with the flange 22 to retain the weather stripping 20 onto the flange 22. A pair of sealing members 32 and 34 extend from the polymeric skin 26 into a channel 36. The channel 36 houses, and the members 32 and 34 seal, the window 18 when the window 18 is in a raised position.

The weather stripping 20 also includes sealing members 38 and 40 extending from the skin 26 on the exterior of the S-shaped reinforcement member 24. The sealing members 38 and 40 generally seal the weather stripping 20 against the door pillar 17 and header 14.

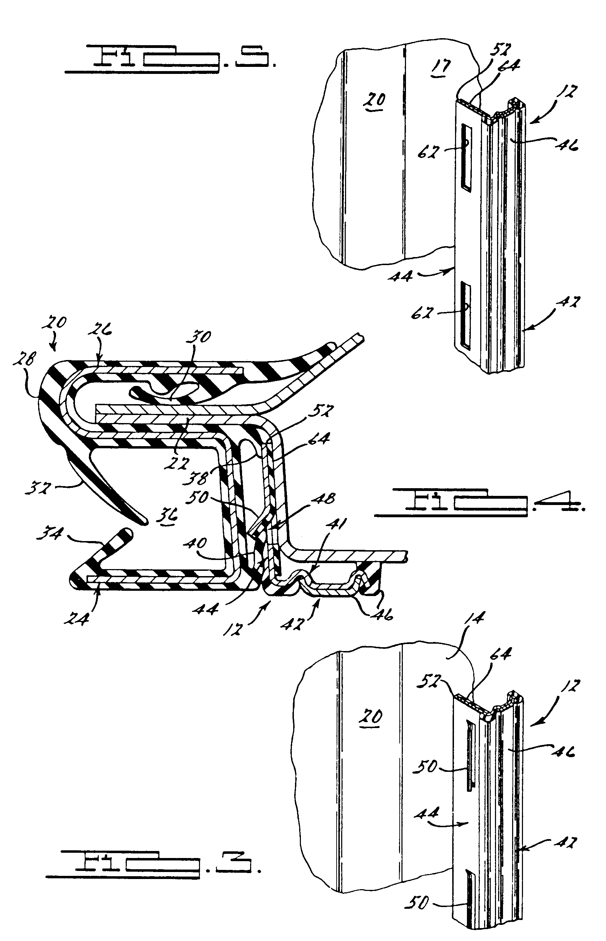

The decorative trim 12 includes an L-shaped member 41 having a trim portion 42 and a retention portion 44. The trim portion 42 may include various types of metal or polymeric inserts 46 to provide the strip with a pleasing aesthetic appearance, as seen in Figures 3 and 4. Also, the trim portion 42 may include any type of design desired by the designer.

The retention portion 44 being substantially flat and planar extends substantially perpendicular to the trim portion 42. The retention portion 44 includes one or more discontinuities 48 which couple with the sealing member 40 to retain the trim strip 12 on the door pillar 17, as seen in Figure 4. The discontinuities 48 may be one or more tab members 50 extending from the substantially planar surface of the retention portion 44. The tab portions 50 engage the sealing member 40 to lock mechanically the trim strip 12 between the door pillar 17 and the flush glass weather stripping 20. Thus, the automotive trim strip 12 is retained on the door by the weather stripping without the use of auxiliary fasteners such as screws, clips, or the like. The weather stripping 20 thus provides a lock between the weather stripping 20 and the door pillar 17.

Ordinarily, the extending end 52 of the retention portion 44 is wedged and pushed between the sealing member 40 and the door pillar 17. As the retaining portion 44 passes over the sealing member 40, the one or more tabs 50 engage with the sealing member 40, as seen in Figure 4. This engagement retains the automotive trim strip 12 on the door pillar 17.

To withdraw the trim strip 12 from between the pillar 17 and weather stripping 20, a substantial amount of force is needed to bend back the sealing member 40 so that the one or more tabs 50 exit from between the weather stripping 20 and the pillar 17.

Moving to Figures 5 and 6, another embodiment of the present invention is shown. Elements that are the same as previously described are designated with the same reference numeral.

The weather stripping 20 includes an additional sealing member 60 on the polymeric skin 26 on the exterior of the S-shaped reinforcement member 24. The member 60 extends further away from the reinforcement member 24 than sealing members 38 and 40. Generally, the sealing member 60 is positioned between the sealing members 38 and 40.

The automotive trim 12 retaining portion 44 includes one or more apertures 62 in the planar member 44. Generally, the one or more apertures 62 are spaced at desired positions along the retaining member 44. Also, a strip of polymeric material 64 is positioned on one side of the retaining portion 44. The strip 64 includes apertures 66 aligned with the apertures 62 of the retaining portion 44. The polymeric strip 64 abuts the pillar 17, as seen in Figure 6. The strip enhances the retention of the trim strip 12 between the weather stripping 20 and the pillar 17.

The automotive trim strip 12 is slid between the sealing members 40, 60 and 38 and the pillar 17. As the one or more apertures 62 pass the member 60, the member 60 projects into the one or more apertures 62 to retain the automotive trim 12 on the door 16, as seen in Figure 6.

## Claims

1. A system for attaching automotive trim to a vehicle door (16), comprising:
weather stripping (20) adapted to be secured on a flange (22) of the vehicle door (16), said weather stripping (20) having means (36) for receiving a movable window (18), means (30) for retaining said weather stripping (20) on the door flange (22) and means (38,40,60) for sealing said weather stripping (20) with respect to the vehicle door (16);
characterised in that the system further comprises
an automotive trim strip (12) having a reinforcement member (41) with an overall L shape, one leg of said L-shaped member (41) including means (44) for retaining said automotive trim strip (12) on the vehicle door (16) and said one leg being rigid and adapted to be forced between said weather stripping (20) and said vehicle door (16) to be retained by said weather stripping (20), said trim strip retaining means (44) coupling with said weather stripping sealing means (38,40,60) for retaining said automotive trim strip (12) on the vehicle door (16).

2. A system according to claim 1 wherein said automotive trim retaining means (44) comprises one or more tabs (50) extending from said one leg, said tabs (50) coupling with said weather stripping (20) for retaining said automotive trim strip (12) on the vehicle door (16).

3. A system according to claim 2 further comprising a polymeric strip (64) coupled with said trim strip flange and abutting said vehicle door (16).

4. A system according to claim 2 wherein said tabs (50) are coupled with said sealing means (38,40,60) for retaining said trim strip (12) on the vehicle door (16).

5. A system according to claim 4 wherein said sealing means (38,40,60) comprises one or more resilient polymeric members extending from said weather stripping (20) and abutting the vehicle door (16), said one or more tabs (50) coupling with said one or more extending resilient polymeric members for retaining said trim strip (12) on the vehicle door (16).

6. A system for attaching an automotive trim strip, comprising:
an automotive vehicle (10) having a member defining an opening for a window (18) or the like, said member including a peripheral flange (22) extending inwardly into said opening;
weather stripping (20) adapted to be secured to said peripheral flange (22), said weather stripping (20) including means (36) for receiving a movable window (18), means (30) for securing said weather stripping (20) to said flange (22) and means (38,40,60) for sealing said weather stripping (20) with respect to said vehicle (10); characterised in that the system further comprises a
trim strip (12) for providing aesthetic appearance to said vehicle (10), said trim strip (12) having a rigid reinforcement member (41) with an overall L shape, one leg of said L-shaped member (41) including means (44) for securing said trim strip (12) to said vehicle (10) and said one leg being wedged between said weather stripping (20) and said vehicle (10) to be retained by said weather stripping (20), said trim strip retaining means (44) mechanically coupling with said weather stripping sealing means (38,40,60) for retaining said trim strip (12) on the vehicle (10).

7. A system according to claim 6 wherein said trim strip retaining means (44) includes one or more tabs (50) extending from said one leg for coupling with said weather stripping (20) for retaining said trim strip (12) on said vehicle (10).

8. A system according to claim 7 further comprising a polymeric strip (64) coupled with said trim strip flange and abutting said vehicle (10).

9. A system according to claim 7 wherein said one or more tabs (50) are coupled with said sealing means (38,40,60) for retaining said trim strip (12) on the vehicle (10).

10. A system according to claim 9 wherein said sealing means (38,40,60) comprises one or more resilient polymeric members extending from said weather stripping (20) and abutting the vehicle (10), said one or more tabs (50) coupling with said one or more extending resilient polymeric members for retaining said trim strip (12) on the vehicle (10).

11. A system according to claim 7 wherein said trim strip (12) is removable from said vehicle (10).

12. A system according to claim 6 wherein said trim strip retaining means (44) includes one or more slots (62) in said one leg for coupling with said weather stripping (20) for retaining said trim strip (12) on said vehicle (10).

13. A system according to claim 12 wherein said sealing means (38,40,60) comprises a plurality of resilient members extending from said weather stripping (20) for abutting and sealing said vehicle (10).

14. A system according to claim 13 wherein one of said plurality of sealing members extends further from said weather stripping (20) than the others, said further extending member coupling with said one or more slots (62) for mechanically retaining said trim strip (12) on said vehicle (10).

## Patentansprüche

1. System für die Befestigung einer Autoverzierung an einer Fahrzeugtür (16) mit: einem Wetterstreifen (20), der an einem Flansch (22) der Fahrzeugtür (16) befestigt werden kann und der Mittel (36) zur Aufnahme eines bewegbaren Fensters (18), Mittel (30) zum Halten des Wetterstreifens (20) auf dem Türflansch (22) und Mittel (38, 40, 60) zum Abdichten des Wetterstreifens (20) bezüglich der Fahrzeugtür (16) aufweist, dadurch gekennzeichnet, daß das System ferner einen Autozierstreifen (12) aufweist, der ein Verstärkungselement (41) mit einer L-Gesamtform hat, wobei ein Schenkel des L-förmigen Elementes (41) Mittel (44) zum Halten des Autozierstreifens (12) an der Fahrzeugtür (16) aufweist und der eine Schenkel starr ist und zwischen dem Wetterstreifen (20) und der Fahrzeugtür (16) gezwängt werden kann, wobei er von dem Wetterstreifen (20) gehalten wird, und wobei das Haltemittel (44) des Zierstreifens mit dem Dichtungselement (38, 40, 60) des Wetterstreifens verbunden ist, um den Autozierstreifen (12) an der Fahrzeugtür (16) zu halten.

2. System nach Anspruch 1, wobei das Haltemittel (44) des Autozierstreifens einen oder mehrere von dem einen Schenkel sich erstreckende Lappen (50) aufweist, die mit dem Wetterstreifen (20) verbunden sind, um den Autozierstreifen (12) an der Fahrzeugtür (16) zu halten.

3. System nach Anspruch 2, das ferner einen polymeren Streifen (64) aufweist, der mit dem Zierstreifenflansch verbunden ist und an die Fahrzeugtür (16) anstößt.

4. System nach Anspruch 2, wobei die Lappen (50) mit dem Dichtungsmittel (38, 40, 60) verbunden sind, um den Zierstreifen (12) an der Fahrzeugtür (16) zu halten.

5. System nach Anspruch 4, wobei das Dichtungsmittel (38, 40, 60) ein oder mehrere elastische Polymerelemente aufweist, die sich von dem Wetterstreifen (20) erstrecken und die an die Fahrzeugtür (16) anstoßen, wobei der eine oder die mehreren Lappen (50) mit dem einen oder den mehreren, sich erstreckenden, elastischen Polymerelementen verbunden sind, um den Zierstreifen (12) an der Fahrzeugtür (16) zu halten.

6. System für die Befestigung eines Autozierstreifens mit:
einem Kraftfahrzeug (10), das ein Element aufweist, welches eine Öffnung für ein Fenster (18) oder ähnliches bildet und welches einen peripheren Flansch (22) hat, der sich nach innen in die Öffnung erstreckt;
einem Wetterstreifen (20), der an dem peripheren Flansch (22) befestigt werden kann und der Mittel (36) zur Aufnahme eines bewegbaren Fensters (18), Mittel (30) zur Befestigung des Wetterstreifens (20) an dem Flansch (22) und Mittel (38, 40, 60) zur Abdichtung des Wetterstreifens (20) bezüglich des Fahrzeuges (10) aufweist, dadurch gekennzeichnet, daß das System ferner einen Zierstreifen (12) zur Bereitstellung eines ästhetischen Erscheinens des Fahrzeuges (10) aufweist, der ein starres Verstärkungselement (41) mit einer L-Gesamtform hat, wobei ein Schenkel des L-förmigen Elementes (41) Mittel (44) zum Befestigen des Zierstreifens (12) an dem Fahrzeug (10) aufweist und der eine Schenkel zwischen den Wetterstreifen (20) und das Fahrzeug (10) gezwängt wird, wobei er von dem Wetterstreifen (20) gehalten wird, und wobei das Haltemittel (44) des Zierstreifens mechanisch mit dem Dichtungsmittel (38, 40, 60) des Wetterstreifens verbunden ist, um den Zierstreifen (12) an dem Fahrzeug (10) zu halten.

7. System nach Anspruch 6, wobei das Haltemittel (44) des Zierstreifens einen oder mehrere von dem einen Schenkel sich erstreckende Lappen (50) aufweist, die mit dem Wetterstreifen (20) verbunden sind, um den Streifen (12) an dem Fahrzeug (10) zu halten.

8. System nach Anspruch 7, das ferner einen polymeren Streifen (64) aufweist, der mit dem Zierstreifenflansch verbunden ist und der an das Fahrzeug (10) anstößt.

9. System nach Anspruch 7, wobei der eine oder die mehreren Lappen (50) mit dem Dichtungsmittel (38, 40, 60) verbunden sind, um den Zierstreifen (12) an dem Fahrzeug (10) zu halten.

10. System nach Anspruch 9, wobei das Dichtungsmittel (38, 40, 60) ein oder mehrere elastische Polymerelemente aufweist, die sich von dem Wetterstreifen (20) erstrecken und die an die Fahrzeugtür (10) anstoßen, wobei der eine oder die mehreren Lappen mit dem einen oder den mehreren, sich erstreckenden, elastischen Polymerelementen verbunden sind, um den Zierstreifen (12) an dem Fahrzeug (10) zu halten.

11. System nach Anspruch 7, wobei der Zierstreifen (12) von dem Fahrzeug (10) entfernbar ist.

12. System nach Anspruch 6, wobei das Haltemittel (44) des Zierstreifens einen oder mehrere Schlitze (62) in dem einen Schenkel für die Verbindung mit dem Wetterstreifen (20) aufweist, um den Zierstreifen (12) an dem Fahrzeug (10) zu halten.

13. System nach Anspruch 12, wobei das Dichtungsmittel (38, 40, 60) mehrere elastische Elemente aufweist, die sich von dem Wetterstreifen (20) für ein Anstoßen an und ein Abdichten des Fahrzeuges (10) erstrecken.

14. System nach Anspruch 13, wobei ein oder mehrere Dichtungselemente sich weiter von dem Wetterstreifen (20) als die anderen erstrecken und wobei das sich weiter erstreckende Element mit dem einen oder den mehreren Schlitzen (62) verbunden sind, um den Zierstreifen (12) an dem Fahrzeug (10) mechanisch zu halten.

## Revendications

1. Système pour fixer une garniture automobile à une porte de véhicule (16) comprenant :
un joint d'étanchéité (20) prévu pour être fixé sur une flasque (22) de la portière du véhicule (16), ledit joint d'étanchéité (20) comportant un moyen (36) pour recevoir une fenêtre mobile (18), un moyen (30) pour maintenir ledit joint d'étanchéité (20) sur la flasque de la portière (22) et des moyens (38, 40, 60) pour étanchéifier ledit joint d'étanchéité (20) par rapport à la portière du véhicule (16),
caractérisé en ce que ce système comprend de plus
une bande de garniture automobile (12) comportant un élément de renforcement (41) avec une forme globale en L, une jambe dudit élément en forme de L (41) comportant un moyen (44) pour maintenir ladite bande de garniture automobile (12) sur la portière du véhicule (16) et ladite jambe étant rigide et prévue pour être forcée entre ledit joint d'étanchéité (20) et ladite portière de véhicule (16) pour être retenue par ledit joint d'étanchéité (20), ledit moyen de maintien de bande de garniture (44) se couplant auxdits moyens d'étanchéité du joint d'étanchéité (38, 40, 60) pour maintenir ladite bande de garniture automobile (12) sur la portière du véhicule (16).

2. Système selon la revendication 1, dans lequel ledit moyen de maintien de garniture automobile (44) comprend une languette ou plusieurs languettes (50) s'étendant à partir de ladite jambe, lesdites languettes (50) se couplant audit joint d'étanchéité (20) pour maintenir ladite bande de garniture automobile (12) sur la portière du véhicule (16).

3. Système selon la revendication 2, comprenant de plus une bande de polymère (64) couplée à ladite flasque de bande de garniture et venant en butée contre ladite portière du véhicule (16).

4. Système selon la revendication 2, dans lequel lesdites languettes (50) sont couplées auxdits moyens d'étanchéité (38, 40, 60) pour maintenir ladite bande de garniture (12) sur la portière du véhicule (16).

5. Système selon la revendication 4, dans lequel lesdits moyens d'étanchéité (38, 40, 60) comprennent un ou plusieurs éléments en polymère élastique s'étendant à partir dudit joint d'étanchéité (20) et venant en butée contre la portière du véhicule (16), ladite languette ou les nombreuses languettes (50) se couplant audit élément ou aux nombreux éléments de polymère élastique dépassant pour maintenir ladite bande de garniture (12) sur la portière du véhicule (16).

6. Système pour fixer une bande de garniture automobile, comprenant :
un véhicule automobile (10) ayant un élément définissant une ouverture pour une fenêtre (18) ou analogue, ledit élément comportant une flasque périphérique (22) s'étendant vers l'intérieur dans ladite ouverture,
un joint d'étanchéité (20) prévu pour être fixé à ladite flasque périphérique (22), ledit joint d'étanchéité (20) comportant un moyen (36) pour recevoir une fenêtre mobile (18), un moyen (30) pour fixer ledit joint d'étanchéité (20) à ladite flasque (22) et des moyens (38, 40, 60) pour étanchéifier ledit joint d'étanchéité (20) par rapport audit véhicule (10),
caractérisé en ce que le système comprend de plus
une bande de garniture (12) pour procurer une apparence esthétique audit véhicule (10), ladite bande de garniture (12) comportant un élément de renforcement rigide (41) avec une forme globale en L, une jambe dudit élément en forme de L (41) comportant un moyen (44) pour fixer ladite bande de garniture (12) audit véhicule (10) et ladite jambe étant coincée entre ledit joint d'étanchéité (20) et ledit véhicule (10) pour être maintenue par ledit joint d'étanchéité (20), ledit moyen de maintien de bande de garniture (44) se couplant mécaniquement avec lesdits moyens d'étanchéité du joint d'étanchéité (38, 40, 60) pour maintenir ladite bande de garniture (12) sur le véhicule (10).

7. Système selon la revendication 6, dans lequel ledit moyen de maintien de bande de garniture (44) comporte une languette ou plusieurs languettes (50) s'étendant à partir de ladite jambe pour se coupler audit joint d'étanchéité (20) pour maintenir ladite bande de garniture (12) sur ledit véhicule (10).

8. Système selon la revendication 7, comprenant de plus une bande de polymère (64) couplée à ladite flasque de bande de garniture et venant en butée contre ledit véhicule (10).

9. Système selon la revendication 7, dans lequel ladite languette ou les nombreuses languettes (50) sont couplées auxdits moyens d'étanchéité (38, 40, 60) pour maintenir ladite bande de garniture (12) sur le véhicule (10).

10. Système selon la revendication 9, dans lequel lesdits moyens d'étanchéité (38, 40, 60) comprennent un ou plusieurs éléments en polymère élastique s'étendant à partir dudit joint d'étanchéité (20) et venant en butée contre le véhicule (10), ladite languette ou les nombreuses languettes (50) se couplant audit élément ou aux nombreux éléments en polymère élastique dépassant pour maintenir ladite bande de garniture (12) sur le véhicule (10).

11. Système selon la revendication 7, dans lequel ladite bande de garniture (12) peut être enlevée dudit véhicule (10).

12. Système selon la revendication 6, dans lequel ledit moyen de maintien de bande de garniture (44) comporte une ou plusieurs fentes (62) dans ladite jambe pour se coupler audit joint d'étanchéité (20) pour maintenir ladite bande de garniture (12) sur ledit véhicule (10).

13. Système selon la revendication 12, dans lequel lesdits moyens d'étanchéité (38, 40, 60) comprennent une multitude d'éléments élastiques s'étendant à partir dudit joint d'étanchéité (20) pour venir en butée et étanchéifier ledit véhicule (10).

14. Système selon la revendication 13, dans lequel un élément de ladite multitude des éléments d'étanchéité s'étend plus loin dudit joint d'étanchéité (20) que les autres, ledit élément s'étendant plus loin se couplant avec ladite fente ou les nombreuses fentes (62) pour maintenir mécaniquement ladite bande de garniture (12) sur ledit véhicule (10).
